# EUROPEAN PATENT SPECIFICATION

(11) **EP 1 364 838 B1**
(45) Date of publication and mention of the grant of the patent: **10.08.2011**
(21) Application number: 03009804.0
(22) Date of filing: 12.05.2003
(51) Int. Cl.: B60R 21/16

(54) **Air bag**
Gassack
Coussin gonflable

(30) Priority: 22.05.2002 JP 2002147960
(43) Date of publication of application: 26.11.2003
(73) Proprietor: Takata Corporation, Tokyo 106-8510 (JP)
(72) Inventor: Hasebe, Masahiro c/o Takata Corporation, Tokyo 106-8510 (JP); Narimoto, Yukitoshi c/o Takata Corporation, Tokyo 106-8510 (JP)
(74) Representative: Banzer, Hans-Jörg

(56) References cited:
- WO-A-02/02376
- US-A1- 2003 230 883
- PATENT ABSTRACTS OF JAPAN vol. 017, no. 099 (M-1373), 26 February 1993 (1993-02-26) -& JP 04 292239 A (ASAHI CHEM IND CO LTD), 16 October 1992 (1992-10-16)

## Description

### [Technical Field of the Invention]

The present invention relates to an air bag to protect an occupant of a vehicle at the time of vehicle collisions and more particularly to an air bag having tie panels that respectively connect left and right half air bags and occupant facing parts thereof.

### [Description of the Related Art]

An air bag is provided to protect an occupant of a vehicle at the time of vehicle collisions with tie panels that connect left and right half air bags and occupant-side front ends as disclosed in Japanese Unexamined Patent Application Publication No. 47-30045.

In WO 02/02376 A1, an airbag is disclosed which has a gap formed between a left airbag section and a right airbag section. The gap may be covered by a flat panel, a webbing or a cover panel. This known airbag generally corresponds to the features as defined in the preamble of independent claim 1.

In JP 04 292239 A, an airbag is illustrated which comprises two bag bodies and a cloth-like material covering a gap between the two bag bodies.

### [Problems to be solved by the Invention]

In the air bag disclosed in Japanese Unexamined Patent Application Publication No. 47-30045, when the left and right half air bags are inflated, they get apart as a whole, thereby forming a big space over the whole area between the left and right half air bags. In this manner, when the big space is formed between the left and right half air bags (inside the tie panel) in case of expansion of the air bag, and the occupant rushes to the tie panel, the occupant intrudes deep into the space to cause deformations such as folding (buckling) of the left and right half air bags, thereby leaving the possibility of failing to catch the occupant securely enough.

It is an object of the present invention to provide an air bag having tie panels that respectively connect left and right half air bags and occupant-side front ends thereof, thereby securely receiving and catching the occupant and sufficiently absorbing an impact applied to the occupant.

### [Means for Solving the Problems]

According to the present invention, this object is achieved by an air bag as defined in Claim 1. The dependent claims define preferred and advantageous embodiments of the invention.

The present invention provides an air bag comprising a left half air bag to be inflated to the front, left side of an occupant; a right half air bag to be inflated to the front, right side of the occupant; and at least one tie panel connecting the left and right half air bag, wherein the left and right half air bags are constructed to contact each other in case of expansion thereof.

In the air bag thus constructed, the left and right half air bags contact each other and a space inside the tie panel gets small when the left and right half air bags are expanded. Therefore, when the occupant rushed to the air bag, he can be safely caught by the air bag without intruding excessively deep into the space.

Further, if there exists a space inside the tie panel, when the occupant rushes into the tie panel, the tie panel can be resiliently retreated with its smaller tension than the internal pressure of the air bag so as to catch the occupant relatively softly, so that the impact to the occupant occurring at the moment when the air bag and passenger contacts each other gets smaller.

In the air bag of the present invention, it is preferable that the tie panel connects an occupant facing part of the left half air bag and an occupant facing part of the right half air bag according to a preferred embodiment. By the above construction, when the occupant rushes into the air bag, an occupant is held by the tie panel, so that the air bag can reduce the impact applied to the occupant sufficiently.

In the air bag according to the preferred embodiment, it is preferable that the tie panel connects an occupant-side front end of the left half air bag and occupant-side front end of the right half air bag. If the tie panel is provided at the front ends of the left and right half air bags as described above, and when an occupant rushes into the air bag, the occupant gets in contact with the tie panel first. This allows the impact to get smaller at the moment when the occupant gets in touch with the air bag. Further, since the tie panel absorbs kinetic energy of the occupant, it leads to a smaller impact when the occupant gets in touch with the left and right half air bags.

Further, in the air bag according to the preferred embodiment, it is preferable that tie panel includes an upper tie panel to connect an upper portion of the occupant facing part of the left half air bag and an upper portion of the occupant facing part of the right half air bag; and a lower tie panel to connect a lower portion of the occupant facing part of the left half air bag and a lower portion of the occupant facing part of the right half air bag. In this case, when an occupant rushes into the inflated air bag, the upper tie panel is arranged to face a chest or head part of the occupant, and the lower tie panel is arranged to face an abdominal part of the occupant. Likewise, if the upper and lower tie panels are provided in this manner, when the chest or head and abdominal parts of the occupant get in touch with the air bag, the upper and lower tie panels can catch the chest, head and abdominal parts relatively softly to thereby greatly reduce the impact applied to the brain or internal organs of the occupant.

Further, in the air bag according to the preferred embodiment, tie panels may be respectively provided at a plurality of portions including the front ends of the left and right half air bags and the upper and lower portions of the occupant facing part thereof, or the tie panels may be selectively provided at any portions thereof. Further, the tie panel may be provided at any portions of the occupant facing part other than those described above. The tie panels may be provided to extend in series all over the upper to lower portions of the occupant facing part.

In the air bag of the present invention, it is preferable that the left-and-right width of the tie panel is 200 to 450 mm. If the width of the tie panel is 200 to 450 mm, when the left and right half air bags are expanded, the front ends of the air bag are arranged to be connected and stopped by the tie panels such that they faces the vicinity of both shoulders of an occupant having an average body shape of an adult, and the tie panels are arranged so as to face the head and abdominal parts of the occupant. This allows the chest or head part and the abdominal part of the occupant to be held by the tie panels having relatively large elasticity, so that an impact applied to the occupant due to the contact with the air bag gets smaller. Furthermore, the left and right half air bags contact with both shoulders of the occupant to securely catch the occupant.

In the air bag of the present invention, connecting panels may be provided to connect upper or lower portions of the left and right half air bags respectively or crosswise, and the connecting panel may have left-and-right width that is tensioned at the expansion of the left and right half air bags.

In case of the structure thus constructed, when an occupant rushes into the left and right half air bags, it is possible to prevent buckling deformation such as the alienation of the forward-and-rearward intermediate portions of the left and right half air bags.

### [Brief Description of The Drawings]

FIG. 1 is a perspective view of an air bag according to an embodiment of the present invention.
FIG. 2 is a cross-sectional view taken along line II-II in FIG. 1.
FIG. 3 is a cross-sectional view taken along line III-III in FIG. 1.
FIG. 4 is a plan view of a state where an occupant faces the air bag in FIG. 1.
FIG. 5 is a side view of a state where an occupant faces the air bag in FIG. 1.
FIG. 6 is an explanatory view of a manufacturing procedure of the air bag in FIG. 1.
FIG. 7 is an explanatory view of a manufacturing procedure of the air bag in FIG. 1.
FIG. 8 is an explanatory view of a manufacturing procedure of the air bag in FIG. 1.
FIG. 9 is an explanatory view of a manufacturing procedure of the air bag in FIG. 1.
FIG. 10 is an explanatory view of a manufacturing procedure of the air bag in FIG. 1.
FIG. 11 is an explanatory view of a manufacturing procedure of the air bag in FIG. 1.
FIG. 12 is a perspective view of an application of an air bag apparatus having the air bag in FIG. 1.
FIG. 13 is a perspective view of an air bag according to another preferred embodiment of the present invention.
FIG. 14 is a perspective view of another construction of an air bag apparatus having the air bag in FIG. 13.
FIG. 15 is a perspective view of an air bag.
FIG. 16 is a perspective view of a construction of an air bag constructed in a different shape.
FIG. 17 is a perspective view of an air bag according to further another embodiment of the present invention.
FIG. 18 is a cross-sectional view taken along line XVIII-XVIII in FIG. 17.
FIG. 19 is an explanatory view of a manufacturing procedure of the air bag in FIG. 17.
FIG. 20 is an explanatory view of a manufacturing procedure of the air bag in FIG. 17.
FIG. 21 is an explanatory view of a manufacturing procedure of the air bag in FIG. 17.
FIG. 22 is an explanatory view of a manufacturing procedure of the air bag in FIG. 17.
FIG. 23 is an explanatory view of a manufacturing procedure of the air bag in FIG. 17.
FIG. 24 is an explanatory view of a manufacturing procedure of the air bag in FIG. 17.
FIG. 25 is a perspective view of an air bag according to further still another embodiment of the present invention.
FIG. 26 is a plan view of inner and outer panels of the air bag in FIG. 25.
FIG. 27 is an exploded perspective view of the air bag in FIG. 25.
FIG. 28 is a top plan view of an air bag schematically illustrating an arrangement of the inner and outer panels of the airbag in FIG. 25.

### [Description of the Embodiments]

Hereinafter, preferred embodiments of the present invention will be described in detail with reference to drawings.

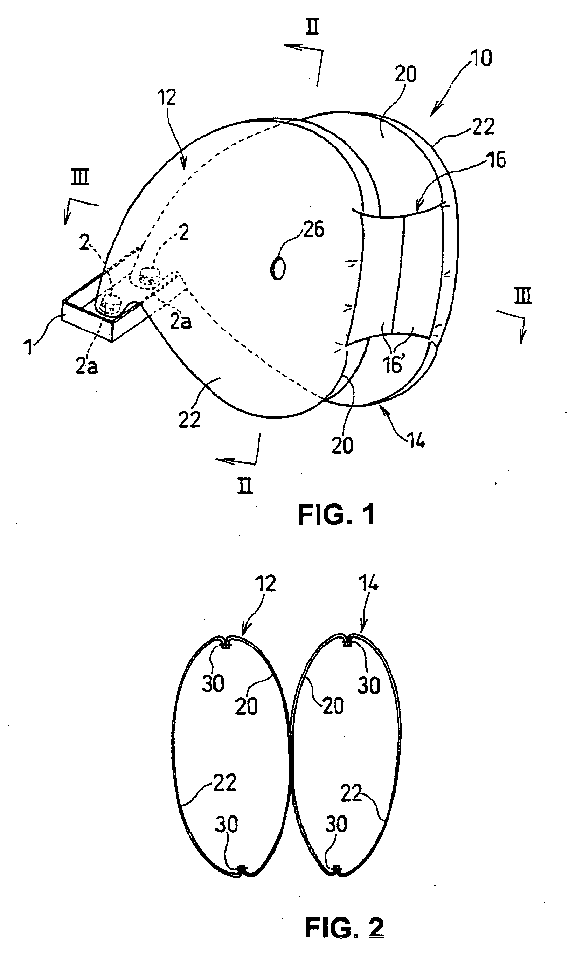

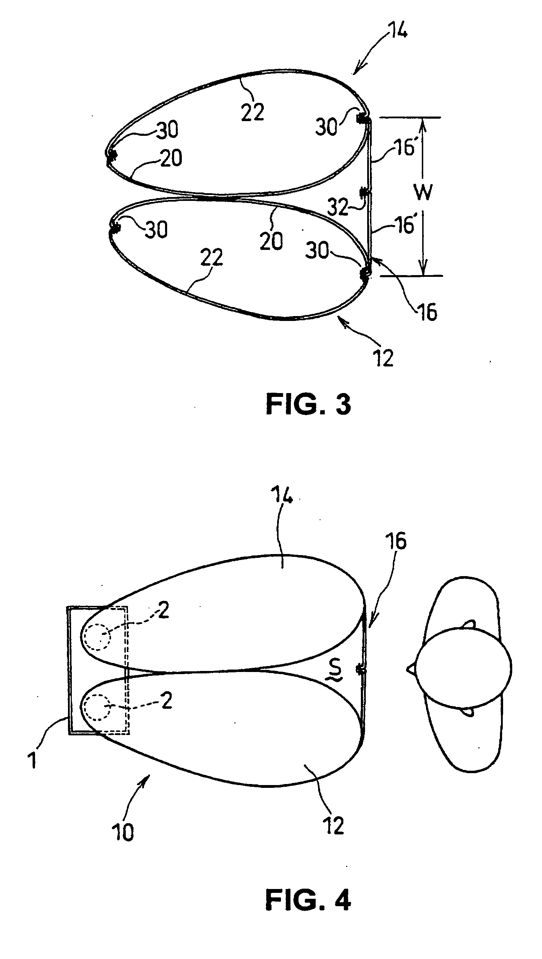

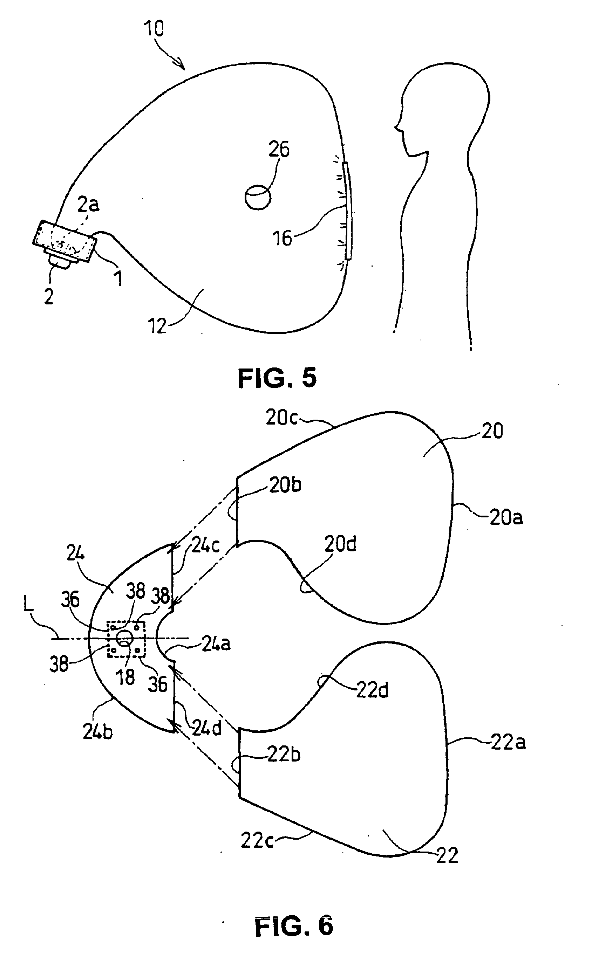

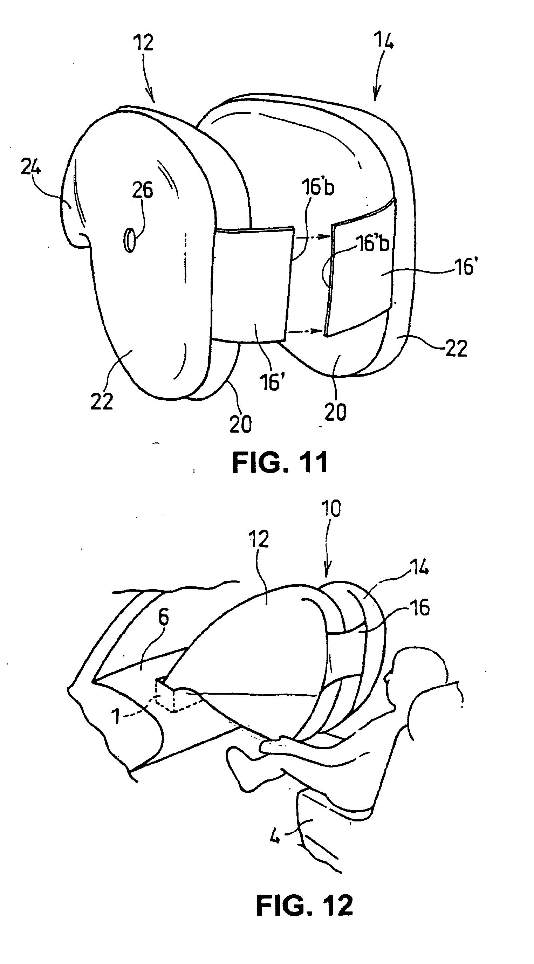

FIG. 1 is a perspective view showing a state that an air bag according to an embodiment of the present invention is expanded; FIGS. 2 and 3 are cross-sectional views taken along lines II-II and III-III in FIG. 1; FIGS. 4 and 5 are respectively plan and side views of a state where an occupant having an average body shape of an adult faces an air bag; FIGS. 6 to 11 are explanatory views of a manufacturing procedure of an air bag according to an embodiment of the present invention; FIG. 12 is a perspective view around a passenger seat of a vehicle illustrating an application showing an air bag apparatus having the air bag, a state where an occupant faces the air bag. Further, in the following description, left and right directions means the left and right directions of an occupant.

The air bag 10 comprises a left half air bag 12 to be inflated to the front, left side of an occupant, a right half air bag 14 to be inflated to the front, right side of the occupant, and a tie panel 16 connecting the occupant-side front end of the left and right half air bags 12 and 14. The left and right half air bags 12 and 14 include an inflator opening 18 (refer to FIGS. 6 to 10) at the rear ends opposite to the occupant, respectively.

The left and right half air bags 12 and 14 respectively consists of an inner panel 20 in which the air bags 12 and 14 face each other, an outer panel 22 opposite to the inner panel 20, and a rear end panel 24 respectively connected to the rear ends of the inner and outer panels 20 and 22. The inflator opening 18 is provided in the rear end panel 24. Further, a vent hole 26 (not shown in FIGS. 6 to 10) is provided in the outer panel 22.

As shown in FIG. 6, the inner and outer panels 20 and 22 include substantially vertically extended occupant-side front hems 20a and 22a, rear hems 20b and 22b opposite to the front hems 20a and 22a, and upper hems 20c and 22c and lower hems 20d and 22d connecting both ends of the front hems 20a and 22a and the rear hems 20b and 22b, respectively, and the rear hems 20b and 22b are shorter than the front hems 20a and 22a and formed substantially in a trapezoidal shape. Further, the rear end panel 24 is formed substantially in a half-ring and provided with inner and outer circumferential hems 24a and 24b in the semicircular shape concentrically facing each other and both end hems 24c and 24d connecting both ends of the inner and outer circumferential hems 24a and 24b.

Further, the inner and outer panels 20 and 22 are constructed in the plane symmetry like a mirror image. Moreover, the length of the rear hems 20b and 22b of the inner and outer panels 20 and 22 is almost equal to that of both end hems 24c and 24d of the rear end panel 24.

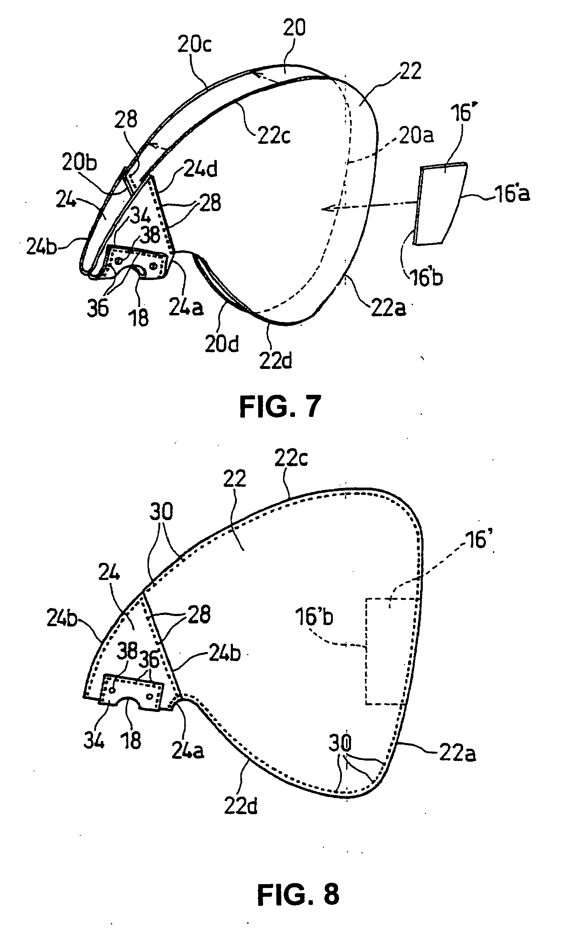

The rear hems 20b and 22b of the inner and outer panels 20 and 22 are respectively overlapped with both end hems 24c and 24d of the rear end panel 24 and joined by sewing or the like such that the inner circumferential hem 24a of the rear end panel 24 and the lower hems 20d and 22d of the inner and outer panels 20 and 22 are arranged in series, respectively, and the outer circumferential hem 24b of the rear end panel 24 and the upper hems 20c and 22c of the inner and outer panels 20 and 22 are arranged in series, respectively. Reference numeral 28 in FIGS. 7 to 10 represents joining lines.

Two rear end panels 24 are folded in a folded shaped along a folding line L (FIG. 6) where the circumferential intermediate portions of the inner and outer circumferential hems 24c and 24d are folded, and the inner and outer panels 20 and 22 are overlapped. One half of the inner circumferential hem 24a and the other half thereof, and one half of the outer circumferential hem 24b and the other half thereof, which are overlapped by the folding, the upper hems 20c and 22c, lower hems 20d and 22d and front hems 20a and 22a of the inner and outer panels 20 and 22, which are arranged in series with those described above, respectively, are joined by sewing or the like, thereby being constructed into sack-shaped air bags 12 and 14. The joining operation is performed along a joining line 30 (FIG. 8) which extends so as to run around substantially the circumferential edges of the air bags 12 and 14 along the respective hems thereof.

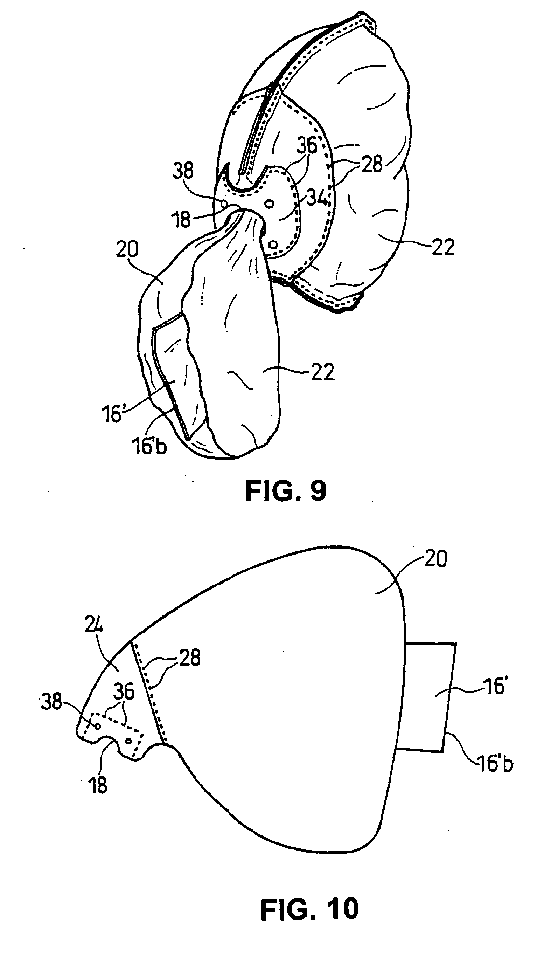

As shown in FIG. 10, the joining line 30 is arranged inside the air bags 12 and 14. Therefore, the joining part between the inner and outer panels 20 and 22 is not exposed outside to cause the front ends of the air bags 12 and 14 facing an occupant to be smooth.

The left and right half air bags 12 and 14 are arranged to cause the respective inner panels 20 to contact each other when they are expanded.

The tie panel 16 is made up of a pair of tie panel half bodies 16' and 16'. The tie panel half bodies 16' and 16' are respectively connected to the front ends of the left and right half air bags 12 and 14. The tie panel half bodies 16' and 16' are joined to the left half air bag 12 and the right half air bag 14', respectively, when the base end hems 16'a thereof are sandwiched between the front hems 20a and 22a of the inner and outer panels 20 and 22 of the left half air bag 12 or the right half air bag 14, and the front hems 20a and 22a are joined together along the joining line 30.

The front end hems 16'b and 16'b of the tie panel half bodies 16' and 16' are joined respectively joined to the left and right half air bags 12 and 14 in the above manner, to thereby connect the front end of the left half air bag 12 and the front end of the right half air bag 14. Reference numeral 32 in FIG. 3 represents a joining line between the front-end hems 16'b and 16'b. Also, the joining line 32 is arranged at the inner side of the tie panel 16, and the joining part between the front-end hems 16'b is not exposed to the occupant, thereby causing the front surface of the tie panel 16 to be smooth.

It is preferable that the left-and-right width W (FIG. 3) of the tie panel 16 (a gap between the connecting parts between each of the tie panel half bodies 16' and 16' and the front end of each of the air bags 12 and 14 while the tie panel 16 is tightly tensioned) is 200 to 450 mm. If the width W of the tie panel 16 is set within a range of 200 to 450 mm, as shown in FIG. 4, the front ends of the left and right half air bags 12 and 14 respectively faces both shoulders of an occupant having an average body shape and the tie panel 16 is arranged in front of the occupant's chest while the tie panel 16 is in expansion.

In the air bag 10 described above, it is possible to properly adjust the width W of the tie panel 16 by moving a preset position of the joining line 32 to the front ends or base ends of the respective tie panel half bodies 16' and 16'.

The upper edge of the tie panel 16 is arranged lower than the upper end of the left and right half air bags 12 and 14 as shown in FIG. 5. Further, the lower edge of the tie panel 16 is arranged higher than the lower end of the left and right half air bags 12 and 14 as shown in FIG. 5.

The air bag 10 is mounted in an air bag apparatus to protect an occupant from dangers at the time of vehicle collisions. The air bag apparatus includes a retainer 1 for maintaining the air bag 10, an inflator 2 for inflating the air bag 10 and a cover (not shown) mounted to the retainer 1. In the air bag 10, a gas emitting port 2a of the inflator 2 is provided in the left and right half air bags 12 and 14, respectively, through an opening 18, and a circumferential edge of the opening 18 is tightened to the retainer 1 with a bolt (not shown) along with the inflator 2.

Moreover, in the preferred embodiment described above, as described in FIGS. 7 to 9, a reinforcing cloth 34 is attached to the circumferential edge of the opening 18, to thereby reinforce the circumferential edge of the opening 18. Reference numeral 36 represents a joining line between the reinforcing cloth 32 and the circumferential edge of the opening 18. The reinforcing cloth 34 is joined with the circumferential edge of the opening 18 by means of sewing along the joining line 36. Further, holes 38 are punctured around the opening 18 for allowing the bolts or the like to be inserted therethrough so as to penetrate the reinforcing cloth 32.

An air bag apparatus is constructed so that the air bag 10 is folded and the cover is mounted to the retainer 1 to cover up the folded air bag 10. Further, the cover is made open as the cover is torn apart by the force pressed from the air bag 10 when the air bag 10 is inflated.

The air bag apparatus is, for example, as shown in FIG. 12, installed at an instrument panel 6 in front of a passenger seat 4 of an automobile. The cover is arranged to be substantially flush with the instrument panel 6 at the ordinary times. At the time of vehicular collisions, the inflator 2 is operated for gas emission and the gas from the inflator 2 is introduced respectively to the left and right half air bags 12 and 14. Therefore, the air bag 10 pushes open the cover and is inflated to the front side of an occupant seated at the passenger seat 4 with a seat belt (not shown) on.

As described above, the left and right half air bags 12 and 14 are expanded such that the inner panels 20 thereof contact each other. Further, the left and right half air bags 12 and 14 are expanded such that the front ends thereof faces both shoulders of an occupant, and are arranged such that the tie panel 16 faces an occupant's chest. A space S is formed inside the tie panel 16 as shown in FIG. 4.

In case that an occupant rushes into the air bag 10, the front ends of the left and right half air bags 12 and 14 hold both shoulders of the occupant and the tie panel 16 holds the occupant's chest. Since there exists a space S inside the tie panel 16, the tie panel 16 retreats elastically to catch the occupant's chest relatively softly when the occupant's chest gets in touch with the tie panel 16, and to make the impact inflicted to the occupant's chest smaller at the moment when the occupant's chest gets in contact with the tie panel 16.

In the air bag 10 described above, since the left and right half air bags 12 and 14 contact each other, the space S inside the tie panel 16 gets smaller to prevent the occupant rushing into the tie panel 16 from excessively intruding into the space S. In addition, since the left and right half air bags 12 and 14 contact each other, they support each other to prevent the folding (buckling) of the left and right half air bags 12 and 14, so that both shoulders of the occupant are securely caught by the air bag 10.

Next, a manufacturing procedure of the left and right half air bags 12 and 14 is described below. FIGS. 6 to 10 illustrate the manufacturing procedure of the right half air bag 14. The left and right half air bags 12 and 14 are manufactured by the same procedure except that the arrangement of the inner and outer panels 20 and 22 are opposite to each other.

Fist of all, as shown in FIG. 6, the inner panel 20, the outer panel 22 and the rear end panel 24 are arranged, the rear hems 20b and 22b of the inner and outer panels 20 and 22 are overlapped with both end hems 24c and 24d of the rear end panel 24 and joined along the joining line 28 such that both ends of the inner circumferential hem 24a of the rear end panel 24 and the lower hems 20d and 22d of the inner and outer panels 20 and 22 are arranged in series, and also such that the outer circumferential hem 24b of the rear end panel 24 and the rear hems 20b and 22b of the inner and outer panels 20 and 22 are arranged in series. A reinforcing cloth 34 is attached to the inner surface of the rear end panel 24 (an inner surface of an air bag product) along the joining line 36 to enhance the circumferential end of the hole 18.

Then, as shown in FIG. 7, the rear end panel 24 is folded along a folding line L to make the outer surfaces of the inner and outer panels 20 and 22 (the outer surfaces of an air bag product) face each other.

At this time, the tie panel half body 16' is inserted into the front hems 20a and 22a of the inner and outer panels 20 and 22 such that the front end edge 16'b thereof face the center of the inner and outer panels 20 and 22, and the base end edge 16'a of the tie panel half body 16' is arranged to follow the front hems 20a and 22a.

Then, as shown in FIG. 8, one half of the inner circumferential hem 24a and the other half thereof, one half of the outer circumferential hem 24b and the other half thereof, and upper hems 20c and 22c, front hems 20a and 22a, and lower hems 20d and 22d of the inner and outer panels 20 and 22, are respectively joined in series along the joining line 30. The base end hem 16'a of the tie panel half body 16' between the front hems 20a and 22a is also joined to the front hems 20a and 22a by the aforementioned joining process. As a result, the right half air bag 14 (or the left half air bag 12, the same will be applied hereinafter) is manufactured in a reverse shape of being inside out.

Next, the right half air bag 14 is turned inside out through the inflator opening 18. Then, as shown in FIG. 10, the joining line 30 is arranged within the air bag, thereby completing the manufacturing processes of the right half air bag 14 in which the front end of the tie panel half body 16' extends from the front end of the air bag.

The left half air bag 12 manufactured in the same procedure as the right half air bag 14 is arranged as shown in FIG. 11, and the front end hems 16'b of the tie panel half bodies 16' and 16' extending from the front ends of the respective air bags 12 and 14 are joined along the joining line 32, thereby completing the manufacturing processes of the air bag 10. The joining line 32 is arranged inside the tie panel 16.

In this embodiment, a circular vent hole 26 is provided around the center of each outer panel 22 of the left and right half air bags 12 and 14. However, the shape, arrangement or number of the vent holes 26 is not limited to the structure described above.

In this embodiment, also, a reinforcing cloth 34 shaped in a substantially square sheet is provided to reinforce the circumferential edge of each inflator opening of the left and right half air bags 12 and 14. However, the shape of the reinforcing cloth 34 is not limited to the structure described above. Further, instead of the reinforcing cloth, the circumferential portion of the hole 18 may be reinforced with other structural modifications like provision of a stitch.

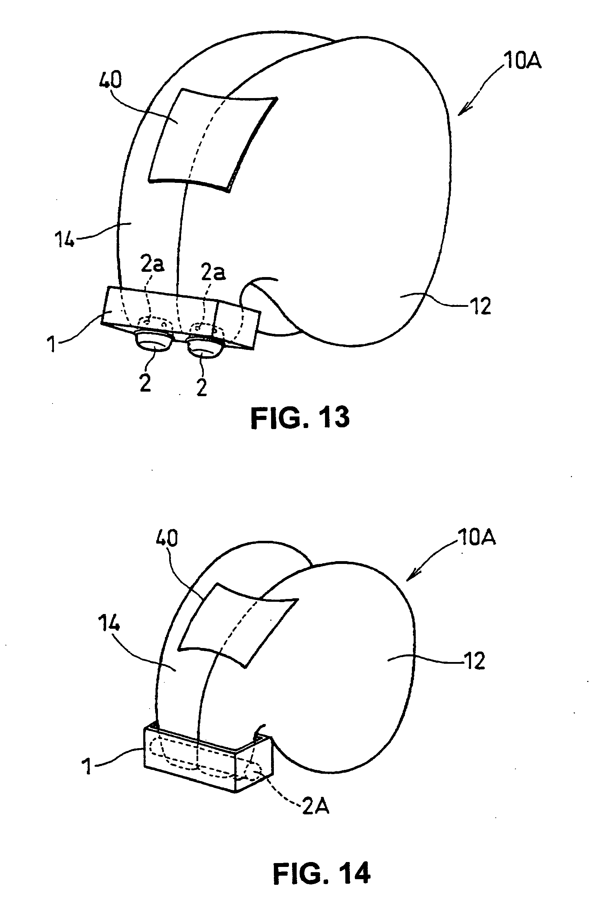

FIG. 13 is a perspective view of a rear end side of an air bag according to another embodiment of the present invention.

In the air bag 10A in FIG. 13, the upper portions of the left and right half air bags 12 and 14 are connected with a connecting panel 40. The connecting panel 40 has left-and-right width that is tensioned between the upper portions of the left and right half air bags 12 and 14 when the left and right half air bags 12 and 14 are expanded.

The other construction of the air bag 10A is the same as the air bag 10 shown in FIGS. 1 to 12. In FIG. 13, same reference numerals indicate the same parts in FIGS. 1 to 12.

In case of the air bag 10A, when the left and right half air bags 12 and 14 are expanded and an occupant rushes into the front ends thereof, a heavy load is applied to suppress the left and right half air bags 12 and 14 in the front and rear directions. Nevertheless, the upper portions of the left and right half air bags 12 and 14 are connected by the connecting panel 40, so that it is possible to prevent buckling deformation such as the alienation of the forward-and-rearward intermediate portions of the left and right half air bags 12.

In addition, in the air bag 10A, the upper portions of the left and right half air bags are connected to thereby prevent buckling deformation such as the alienation of the forward-and-rearward intermediate portions of the left and right half air bags. However, except those described above, although not shown in the drawings, the lower portions of the left and right half air bags may be connected by a connecting panel, or the left and right half air bags may be connected by a series of connecting panels that reach from the upper portions through the front ends to the lower portions.

In the air bag apparatus illustrated in the respective embodiments described above, there are used two inflators 2, called 'a disc type', cylindrically shaped with a short axial length. The inflators 2 are arranged such that they are respectively inserted into each inflator opening 18 of the left and right half air bags 12 and 14 to introduce gas into the left and right half air bags 12 and 14, respectively. However, the structure of introducing gas into the left and right half air bags is not limited to the inflator 2 described above.

For example, as shown in FIG. 14, gas can be respectively introduced into the left and right half air bags 12 and 14 from the one inflator 2A shaped like a horizontally long rod. Further, except those described above, a duct may be provided in one inflator to thereby divide the gas emitted from the one inflator into two. In other words, the duct can be used to distribute the gas from the one inflator to the left and right half air bags.

Further, the other construction of the air bag apparatus in FIG. 14 is the same as that of the air bag apparatus in FIG. 13 except that a rod-shaped inflator 2A is utilized instead of the disc type inflator 2 in FIG 13. At this time, all the reference numerals of FIG. 14 are identical to those of FIG. 13. The same reference numerals in FIG. 14 as those in FIG. 13 indicate the same parts.

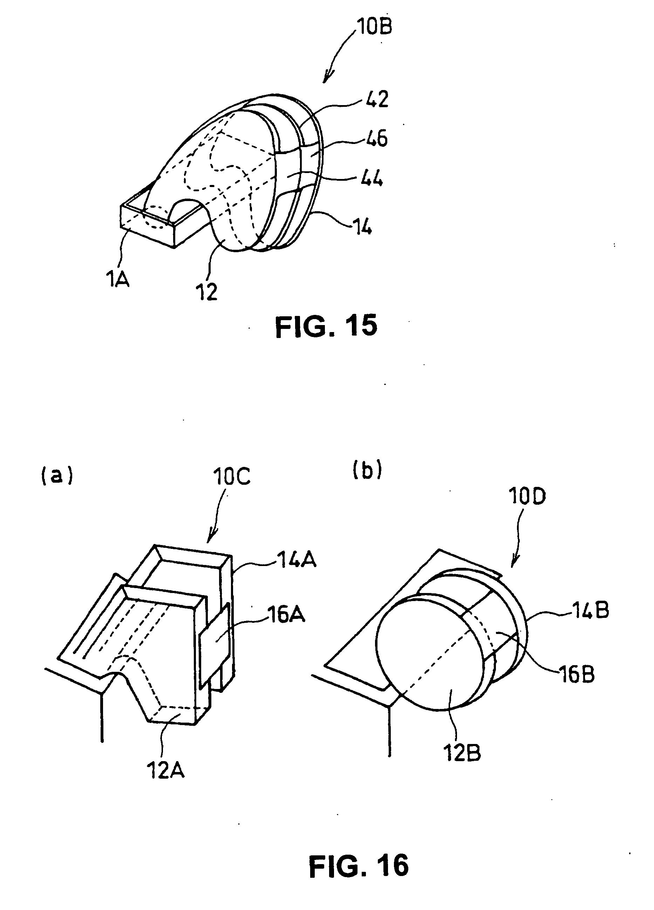

FIG. 15 is a perspective view of an air bag.

In the air bag 10B in FIG. 15, a intermediate air bag 42 constructed almost similarly to the left and right half air bags 12 and 14 in the respective air bag apparatus described above is sandwiched between the left and right half air bags 12 and 14; the front ends of the left half air bag 12 and the intermediate air bag 42 are connected by a tie panel 44; and the front ends of the right half air bag 14 and the intermediate air bag 42 are connected by a tie panel 46.

Reference numeral 1A in FIG. 15 indicates a retainer that maintains the air bag 10B.

The aforementioned air bag 10B can be, for example, properly used as an occupant protecting air bag for the rear seat of an automobile and a bench seat where occupants are seated side by side. In other words, the aforementioned air bag 10B can hold two occupants with the tie panels 44 and 46 when the two occupants sit adjacently with their shoulders being side by side.

In the construction of the aforementioned embodiment, one intermediate air bag 42 is sandwiched between the left and right half air bags 12 and 14. However, two or more intermediate air bags constructed similar to the left and right half air bags 12 and 14 may be sandwiched between the left and right half air bags 12 and 14. In this case, the left half air bag and an intermediate air bag adjacent thereto can be connected by a tie panel; neighboring intermediate air bags can be connected by a tie panel; and the right half air bag and an intermediate air bag adjacent thereto can be connected by a tie panel.

In the respective embodiments described above, the left and right half air bags 12 and 14 (and the intermediate air bag 42) are formed in a trapezoidal shape (viewed from the lateral side), respectively, as shown in FIG. 5. However, the shape of the left and right half air bags (and the intermediate air bag) in the present invention is not limited to a specifically defined one.

For example, an air bag 10C in FIG. 16a is constructed such that left and right half air bags 12A and 14A are formed in polygonal shapes (viewed from the lateral side) and the respective front-end surfaces of the air bags are connected by a tie panel 16A. Further, an air bag 10D in FIG. 16b is constructed such that left and right half air bags 12B and 14B are formed in circular shapes (viewed from the lateral side) and the respective front-end surfaces of the air bags are connected by a tie panel 16B. Of course, in case of the air bag of the present invention, the left and right half air bags (and the intermediate air bag) can be made into various shapes except those described above.

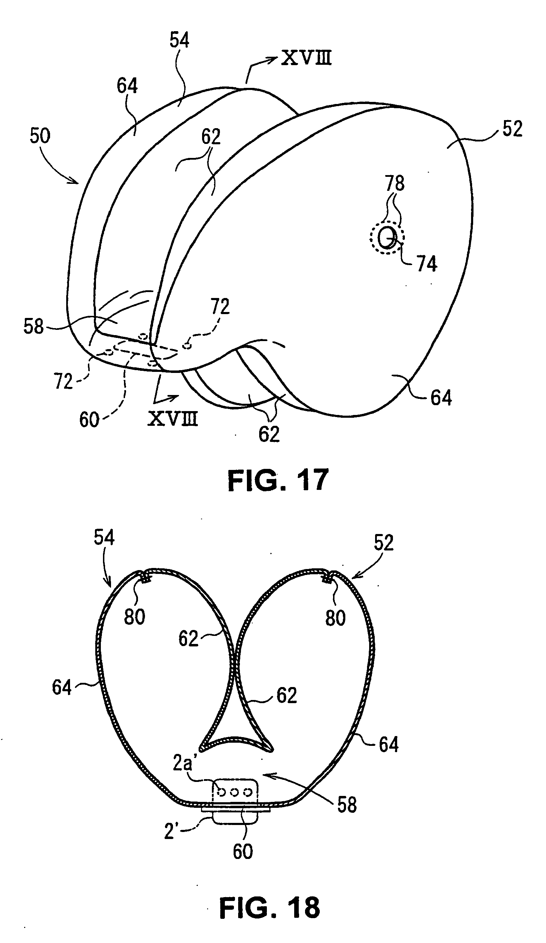

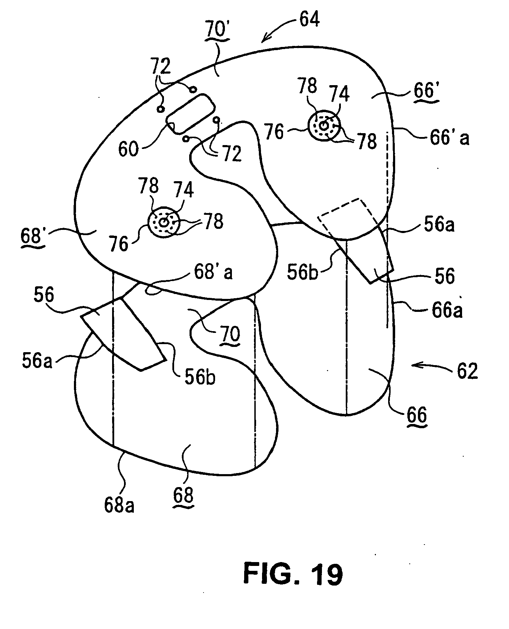

FIG. 17 is a perspective view of an air bag according to another embodiment of the present invention. FIG. 18 is a sectional view taken along line XVIII-XVIII in FIG. 17. FIGS. 19 to 24 are explanatory views of a manufacturing procedure of the aforementioned air bag.

The air bag 50 in FIG. 17 comprises a left half air bag 52 to be inflated to the front, left side of an occupant, a right half air bag 54 to be inflated to the front, right side of the occupant, a pair of tie panel half bodies 56 and 56 for connecting the front ends of the left and right half air bags 52 and 54, a communicating part 58 for causing the rear ends of the left and right half air bags 52 and 54 to communicate with each other, and an inflator opening 60 formed at the communicating part 58.

The air bag 50 consists of an inner panel 62 having panel portions 66, 68 and 70 constituting respective inner surfaces of the left and right half air bags 52 and 54, which face each other when they are turned into an air bag product, and the communicating part 58, and an outer panel 64 having panel portions 66', 68' and 70' constituting respective outer surfaces of the left and right half air bags 52 and 54 and the communicating part 58.

The inflator opening 60 is provided in the panel portion 70' constituting the communicating part 58 of the outer panel 64. Holes 72 are provided around the hole 60 for causing bolts, etc., which are used to connect the air bag 50 to a retainer (not shown) of an air bag apparatus, to be inserted therethrough.

Further, vent holes 74 are provided at the panel portions 66' and 68' of the outer panel 64 which constitute the left and right half air bags 52 and 54. A reinforcing cloth 76 is provided at the circumferential edges of the respective vent holes 74. Reference numeral 78 indicates a joining line of the reinforcing cloth 76 to the outer panel 64. The reinforcing cloth 76 is joined to the outer panel 64 along the joining line 78 by sewing or the like.

Panel portions 66 and 66', panel portions 68 and 68', and panel portions 70 and 70' are respectively formed in plane-symmetrical shapes just like a mirror image. The panel portions 66 and 66' and panel portions 68 and 68', as shown in FIG. 19, extends to the side to which front hems 66a and 66'a and front hems 68a and 68'a arranged at the occupant side when they are made into an air bag products are alienated each other, and the front hems 66a and 66'a and the rear ends thereof facing the front hems 68a and 68'a are respectively connected with both ends of the panel portions 70, 70'.

As shown in FIG. 19, the inner panel 62 and outer panel 64 are overlapped in a symmetrical shape, and both circumferential edges thereof are joined along a joining line 80, which extends to run around the circumferential edge of the inner and outer panels 62 and 64, by sewing or the like. Thus, there are left and right half air bags 52 and 54 shaped in a sack and a communicating part 58 communicating between the rear portions of the left and right half air bags 52 and 54. Further, as shown in FIG. 18, the joining line 80 is arranged inside the air bag 50. Therefore, the joining part between the inner and outer panels 62 and 64 is not exposed outside air bag 50 to thereby cause the surface of the air bag 50 to be smooth.

The left and right half air bags 52 and 54 are arranged such that the respective inner panels 62 thereof contact each other when they are expanded.

The tie panel half bodies 56 and 56 are respectively connected with front ends of the left and right half air bags 52 and 54. The tie panel half bodies 56 are combined with the left and right half air bags 52 and 54, respectively, when base end hems 56a thereof are respectively sandwiched between the front hems 66a and 66'a of the panel portions 66 and 66' and between front hems 68a and 68'a of the panel portions 68 and 68', and the front hems 66a and 66'a and front hems 68 and 68'a are respectively joined along the joining line 80. As a result, the front end hems 56b of the tie panel half bodies 56 respectively connected to the left and right half air bags 52 and 54 are combined to thereby connect the front ends of the left and right half air bags 52 and 54.

In the embodiment, the tie panel half bodies 56 and 56 are connected such that a gap between connecting portions of the respective tie panel half bodies 56 and the front ends of the respective air bags 52 and 54 becomes 200 to 450 mm when the tie panel half bodies 56 and 56 are tightly tensioned between the front ends of the left and right half air bags 52 and 54.

Further, in the above embodiment, the upper edges of the respective tie panel half bodies 56 are arranged lower than the upper ends of the left and right half air bags 52 and 54, and the lower edges of the respective tie panel half bodies 56 are arranged higher than the lower end of the left and right half air bags 52 and 54.

Further, as shown in FIG. 18, a gas emitting port 2'a of an inflator 2' is arranged inside the communicating part 58 through the opening 60. When the inflator 2' operates, the gas emitted from the gas emitting port 2'a is introduced into the left and right half air bags 52 and 54 from both ends of the communicating part 58, and the left and right half air bags 52 and 54 are inflated by the gas to the front, left sides and front, right sides of an occupant. While the left and right half air bags 52 and 54 are expanded, a space is formed inside the tie panel half bodies 56 and 56.

In case that an occupant rushes into the air bag 50, the front ends of the left and right half air bags 52 and 54 hold both shoulders of the occupant and the tie panel half bodies 56 hold the occupant's chest. Since there exists a space S inside the tie panel half bodies 56, the tie panel half bodies 56 and 56 retreat elastically to catch the occupant's chest relatively softly, when the occupant's chest gets in touch with the tie panel half bodies 56 and 56, and to make the impact inflicted to the occupant's chest smaller at the moment when the occupant's chest gets in contact with the tie panel half bodies 56 and 56.

As described above, since the left and right half air bags 52 and 54 are inflated to cause the inner panels 62 thereof contact each other, and even when an occupant rushes into the air bag 50, the left and right half air bags 52 and 54 support each other to prevent the folding (buckling) of the left and right half air bags 52 and 54, so that both shoulders of the occupant are securely caught by the air bag 50.

The left and right half air bags 52 and 54 contact each other, so that the space S inside the tie panel half bodies 56 and 56 gets smaller to prevent the occupant rushing into the tie panel half bodies 56 and 56 from excessively intruding into the space S.

In the air bag 50 described above, the left and right half air bags 52 and 54 are respectively connected and passed by the communicating parts 58, so that one inflator 2' can be used to inflate the whole air bag 50. In other words, the air bag apparatus is equipped with only one inflator, thereby making it possible to manufacture the air bag apparatus inexpensively.

Next, a manufacturing procedure of the aforementioned air bag 50 will be described below.

Fist of all, as shown in FIG. 19, the inner and outer panels 62 and 64 are overlapped with the outer surfaces (outer surfaces of an air bag product) thereof to face each other in a symmetrical shape, and respective base end hems 56a of the tie panel half bodies 56 and 56 are sandwiched between the front hems 66a and 66'a of the panel portions 66 and 66' and between those 68a and 68a' of the panel portions 68, 68'.

At this time, the respective tie panel half body 56 is arranged to cause the front-end hems 56b thereof to face the center sides of the respective panel portions 66 and 66', and the panel portions 68 and 68'.

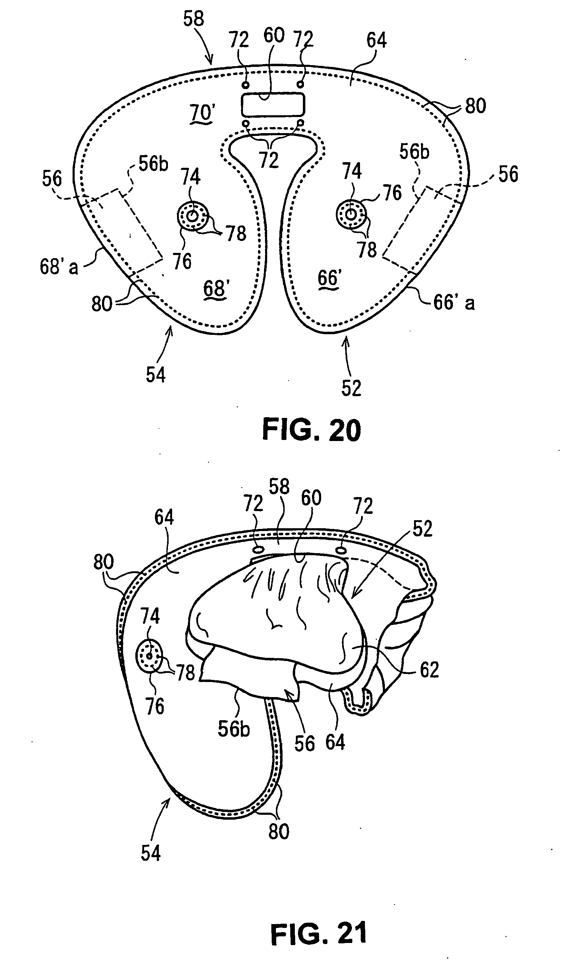

Next, as shown in FIG. 20, the circumferential edges of the inner and outer panels 62 and 64 are joined along the joining line 80. The base end hems 56a of the respective tie panel half bodies 56 sandwiched between the front hems 66a and 66'a and between the front hems 68a and 68'a are also combined with the front hems 66a and 66'a and the front hems 68a and 68'a by the joining operation described above. As a result, the left and right half air bags 52 and 54 and the communicating part 58 are manufactured in a completely reversed shape of being inside out.

Then, as shown in FIG. 21, the inner and outer panels 62 and 64 are reversed through the inflator opening 60.

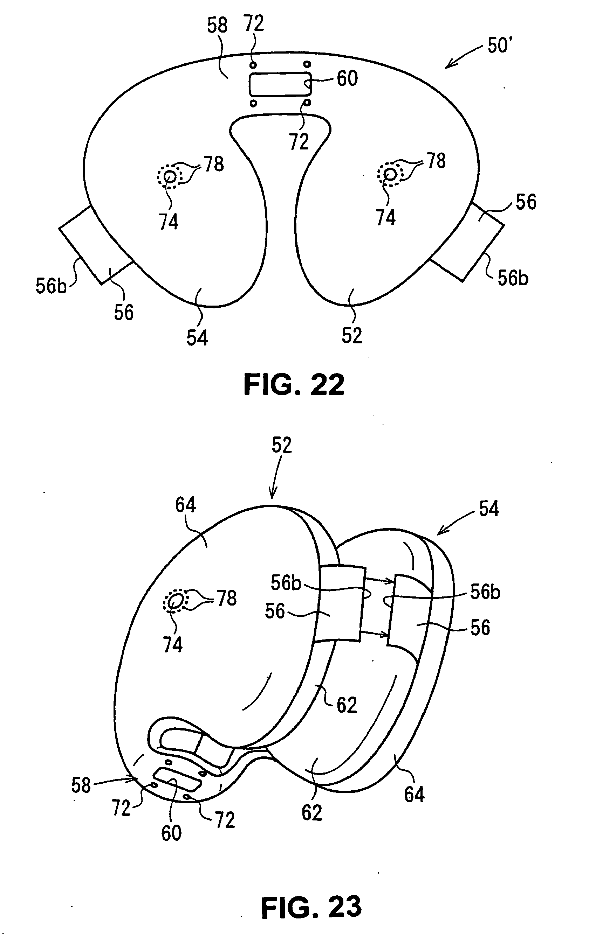

As a result, as shown in FIG. 22, the joining line 80 is arranged inside the air bag, to obtain an air bag product intermediate body 50' in which the front ends of the tie panel half bodies 56 extends from the front ends of the left and right half air bags 52 and 54, respectively.

The air bag product intermediate body 50' is respectively folded around the borderline of the left and right half air bags 52 and 54 and the communicating part 58 so as to cause the inner panels 62 of the left and right half air bags 52 and 54 to face each other, and the front end hems 56b, 56b of the tie panel half bodies 56 and 56 extended from the front end of the air bags 52 and 54 are joined to each other, thereby completing the air bag 50.

Further, in the aforementioned embodiment, the inner and outer panels 62 and 64 in which the panel portions 66, 68, and 70 and the panel portions 66', 68' and, 70' respectively are formed integrally with each other are used. However, it is possible to separately form the respective panel portions and combine them prior to the process of manufacturing an air bag to construct the inner and outer panels shaped like those in FIG. 19. In case of separate formation of the respective panel portions, the composition of material type, thickness or the like may be properly changed to in response with required strength of the respective panel portions.

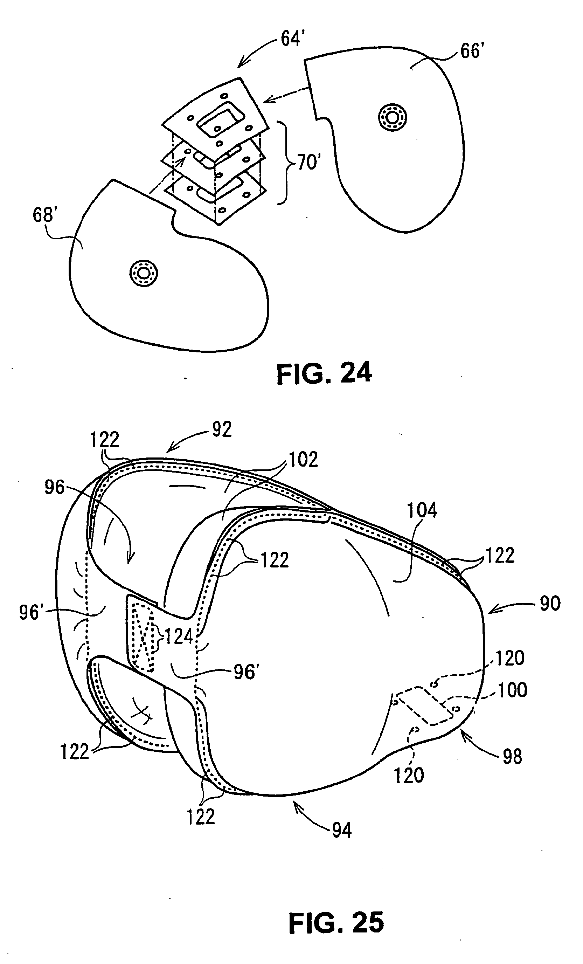

For example, the outer panel 64' in FIG. 24 is made of separately formed panel portions 66', 68' and 70'. At this time, the panel portion 70' constituting the connecting portion with the retainer of the air bag apparatus is made of triple-folded panel sheets to increase strength.

The respective panel portions are separately formed to thereby manufacture the inner and outer panels occupying a large area and having a complex shape with a relatively small area of the panel material without any waste and reinforce only necessary panel portions, thereby making it possible to construct an air bag reasonably and economically.

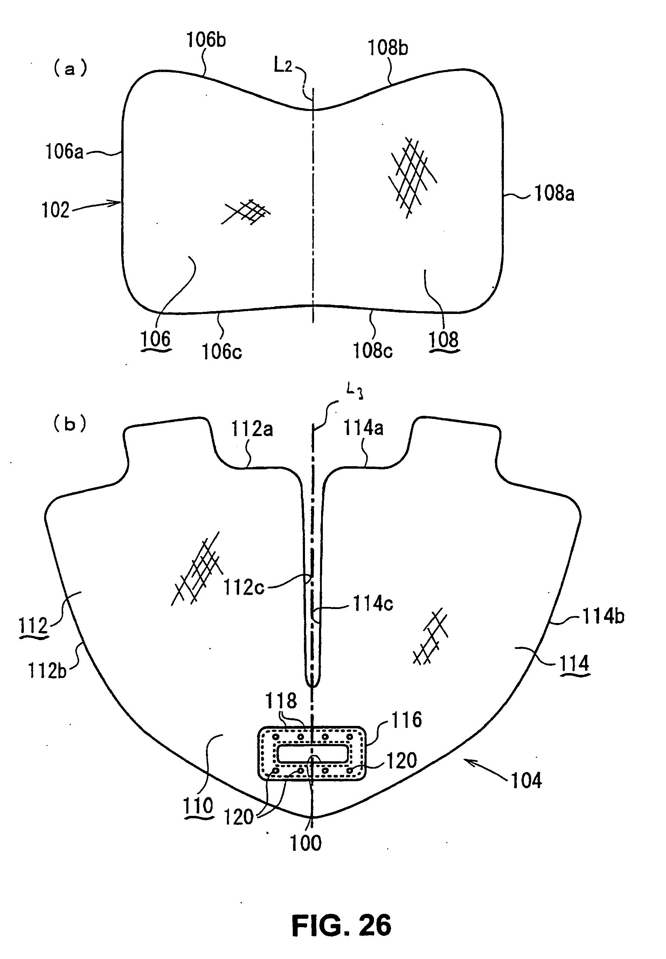

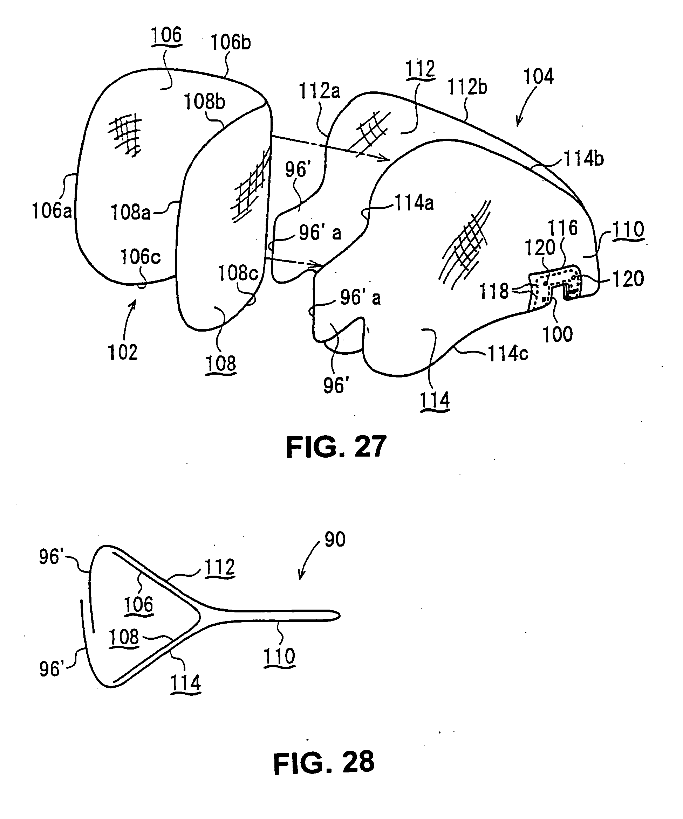

In this embodiment, the air bag 50 in which the left and right half air bags 52 and 54 communicates with each other is constructed according to the above-mentioned manufacturing method. However, an air bag in which left and right half air bags communicates with each other may be constructed according to any manufacturing method except for the above method. For example, in an air bag 90 in FIGS. 25 to 27, left and right half air bags thereof is constructed to communicate with each other according to a procedure different from that for the air bag 50. Further, FIG. 25 is a perspective view of an air bag 90, FIGS. 26(a) and 26(b) are plan views of inner and outer panels of the air bag 90, and FIG. 27 is an exploded perspective view of the air bag 90; and FIG. 28 is a top plan view of an air bag 90 schematically illustrating an arrangement of the inner and outer panels.

The air bag 90 comprises a left half air bag 92 to be inflated to the front, left side of an occupant, a right half air bag 94 to be inflated to the front, right side of an occupant, a tie panel 96 connecting front ends of the left and right half air bags 92 and 94, and a communicating part 98 for communicating rear ends of the left and right half air bags 92 and 94, and an inflator opening 100 is formed at the communicating part 98.

The air bag 90 consists of an inner panel 102 constituting inner surfaces of the left and right half air bags 92 and 94 facing each other when they are turned into an air bag product and an outer panel 104 constituting outer surfaces of the left and right half air bags 92 and 94 and the communicating part 98.

As show in FIG. 26(a), the inner panel 102 includes a left half panel portion 106 constituting an inner surface of the left half air bag 92 and a right half panel portion 108 constituting an inner surface of the right half air bag 94. The left and right half panel portions 106 and 108 are formed in horizontal symmetrical shapes to sandwich a borderline L₂ extended to the left-and-right center of inner panel 102 therebetween. The left and right half panel portions 106 and 108 respectively includes front hems 106a and 108a horizontally extended at front ends of the left and right half air bags 92 and 94, upper hems 106b and 108b extended along the upper edges of the left and right half air bags 92 and 94, and lower hems 106c, 108c extended along the lower edges of the left and right half air bags 92 and 94, when they are turned into an air bag product.

As shown in FIG. 26(b), the outer panel 104 includes a communicating panel portion 110 constituting the communicating part 98 and left and right half panel portions 112 and 114 respectively connected to the left and right half portions of the communicating panel portion 110 to constitute surfaces of the left and right half air bags 92 and 94. The inflator opening 100 is provided in the communicating panel portion 110.

The outer panel 104 is formed in a horizontally symmetrical shape to sandwich a central line L₃ extended to the left-and-right center of the communicating panel portion 110 therebetween.

The left and right half panel portions 112 and 114 are formed in plane-symmetrical shapes with the left and right half panel portions 106 and 108 of the inner panel 102. The left and right half panel portions 112 and 114 includes front hems 112a and 114a vertically extended at the front ends of the left and right half air bags 92 and 94, upper hems 112b and 114b extended along the upper edges of the left and right half air bags 92 and 94, and lower hems 112c and 114c extended along the lower edges of the left and right half air bags 92 and 94, whey they are turned into an air bag product.

In addition, a reinforcing cloth 116 is attached to the communicating panel portion 110 of the outer panel 104 to reinforce the circumferential edge of the hole 100. Reference numeral 118 indicates a joining line to the communicating panel portion 110 of the reinforcing cloth 116. Further, holes 120 are provided around the opening 100 for allowing the bolts or the like (not shown), which connect the air bag 90 with a retainer (not shown) of the air bag apparatus, to be inserted therethrough, so as to penetrate the reinforcing cloth 116.

As shown in FIGS. 27 and 28, the outer panel 104 is folded along the central line L₃ to cause the inner surfaces (inner side of the completely manufactured air bag product) of the left and right half panel portions 112 and 114 to face each other. The inner panel 102 is folded along the borderline L₂ to cause the outer surfaces (outer surfaces of the completely manufactured air bag product) of the left and right half portions 106 and 108 to face each other. In order to cause the inner surfaces of the left and right half panel portions 106 and 108 of the inner panel 102 to face the inner surfaces of the panel portions 112 and 114 of the outer panel 104, the inner panel 102 is arranged between the panel portions 112 and 114 of the outer panel 104.

When the front hems 106a and 112a, the front hems 108a and 114a, the upper hems 106b and 112b, the upper hems 108b and 114b, the lower hems 106c and 112c, the lower hems 108c and 114c of the respective panel portions 106 and 112 and panel portions 108 and 114 facing each other, and the outer circumferential hems of the communicating panel portions 110 with two panel sheets being folded, are respectively joined by sewing or the like, the sack shaped left and right half air bags 92 and 94 and the communicating part 98 communication them are integrally constructed by the joining process. The joining process is performed in series from the outer circumference of the communicating part 98 along the joining line 122 extended to run around the respective hems of the left and right half air bags 92 and 94.

The tie panel 96 consists of a pair of tie panel half bodies 96' and 96' extended from the front ends of the left and right half air bags 92 and 94. In this embodiment, respective tie panel half bodies 96' extend from the front hems 112a and 114a of the left and right half panel portions 112 and 114 of the outer panel 104, and the tie panel half bodies 96' are integrally formed with panel portions 112 and 114.

The front end hems 96'a and 96'a of the tie panel half bodies 96' and 96' are overlapped and joined by sewing or the like to thereby connect the front ends of the left and right half air bags 92 and 94. Reference numeral 124 in FIG. 25 indicates a joining line between the front end hems 96'a.

In the above embodiment, also, the left-and-right width W of the tie panel 96 (a gap between the base ends of the respective tie panel half bodies 96' while the tie panel 96 is tightly tensioned) is 200 to 450 mm. Further, the upper edge of the tie panel 96 is extended lower than the upper edges of the left and right half air bags 92 and 94, and the lower edge of the tie panel 96 is higher than the lower edges of the left and right half air bags 92 and 94.

In this air bag 90, also, a gas emitting port of the inflator (not shown) is arranged inside the communicating part 98 from the inflator opening 100. Gas emitted from the inflator is introduced from both ends of the communicating part 98 into the left and right half air bags 92 and 94, and the left and right half air bags 92 and 94 are inflated to the front, left and right sides of an occupant by the emitted gas.

In the above air bag 90, since the left and right half air bags 92 and 94 are communicated by the communicating part 98, one inflator can inflate the whole air bag 90. Therefore, only one inflator is required for the air bag apparatus to thereby make it possible to construct the air bag apparatus inexpensively.

Other working effects of the air bag 90 will not be described because they are identical to those in the respective embodiments of the air bag described above.

The aforementioned embodiments are examples of the present invention, but the scope of the present invention is not limited to the embodiments described above.

For example, the above respective embodiments are constructed to connect only occupant-side front ends of the left and right half air bags facing the chest of an occupant with one tie panel. However, tie panels may be provided at the upper portions of the occupant facing portions of the left and right half air bags, which faces the head part of the occupant, and at the lower portions of the occupant facing portions of the air bag, which face the abdominal part of the occupant. If the upper and lower tie panels are provided as such, the upper and lower tie panels can catch the head and abdominal part of the occupant when they contact with the air bag, thereby making it possible to significantly reduce the impact inflicted to brain or internal organs of the occupant.

Further, in the air bag of the present invention, tie panels may be provided at a plurality of portions including the front ends of the left and right half air bags and the upper and lower parts of the occupant facing portions, or may be selectively provided at any one of those portions. In addition, tie panels may be provided at occupant facing portions other than those described above. A tie panel may be provided to extend successively across the whole area of the occupant facing part, from the upper portion to the lower portion of the occupant facing part.

### [Effects of the Invention]

As described above, according to the present invention, there is provided an air bag comprising a left half air bag, a right half air bag, and a tie panel connecting the occupant-side front ends of the left and right half air bags to securely catch the occupant and sufficiently absorb the impact inflicted to the occupant.

## Claims

1. An air bag comprising a left half air bag (12; 52; 92) to be inflated to the front, left side of an occupant; a right half air bag (14; 54; 94) to be inflated to the front, right side of the occupant; and at least one tie panel (16; 56; 96) connecting the left and right half air bags, wherein the left and right half air bags are constructed to contact each other in case of expansion thereof, **characterized in that**
a tie panel half body (16'; 56; 96') is connected to the front end of the left half air bag (12; 52; 92) and a further tie panel half body (16'; 56; 96') is connected to the front end of the right half air bag (14; 54; 94), the tie panel half body (16') and the further tie panel half body (16') being joined to form the tie panel (16; 56; 96).

2. The air bag according to Claim 1, wherein the at least one tie panel (16; 56; 96) connects an occupant facing part of the left half air bag (12; 52; 92) and an occupant facing part of the right half air bag (14; 54; 94).

3. The air bag according to Claim 1 or 2, wherein the at least one tie panel (16; 56; 96) connects an occupant-side front end of the left half air bag (12; 52; 92) and an occupant-side front end of the right half air bag (14; 54; 94).

4. The air bag according to any one' of Claims 1 to 3, wherein the at least one tie panel (16; 56; 96) comprises an upper tie panel to connect an upper portion of the occupant facing part of the left half air bag and an upper portion of the occupant facing part of the right half air bag; and a lower tie panel to connect a lower portion of the occupant facing part of the left half air bag and a lower portion of the occupant facing part of the right half air bag.

5. The air bag according to any one of Claims 1 to 4, wherein the left-and-right width of the tie panel (16; 56; 96) is 200 to 450 mm.

6. The air bag according to any one of Claims 1 to 5, wherein connecting panels (40) are provided to connect upper or lower portions of the left and right half air bags (12, 14) respectively or crosswise, the connecting panel (40) having left-and-right width that is tensioned at the expansion of the left and right half air bags (12, 14).

## Patentansprüche

1. Airbag umfassend eine linke Airbaghälfte (12; 52; 92), welche nach vorn auf der linken Seite eines Insassen aufzublasen ist; eine rechte Airbaghälfte (14; 54; 94), welche nach vorn auf der rechten Seite des Insassen aufzublasen ist; und mindestens eine Verbindungsstoffbahn (16; 56; 96), welche die linke und die rechte Airbaghälfte verbindet, wobei die linke und die rechte Airbaghälfte derart konstruiert sind, dass sie einander im Fall ihrer Ausdehnung berühren,
**dadurch gekennzeichnet,**
**dass** eine Körperhälfte (16'; 56; 96') der Verbindungsstoffbahn mit dem vorderen Ende der linken Airbaghälfte (12; 52; 92) verbunden ist und dass eine weitere Körperhälfte (16'; 56; 96') der Verbindungsstoffbahn mit dem vorderen Ende der rechten Airbaghälfte (14; 54; 94) verbunden ist, wobei die Körperhälfte (16') der Verbindungsstoffbahn und die weitere Körperhälfte (16') der Verbindungsstoffbahn miteinander verbunden sind, um die Verbindungsstoffbahn (16; 56; 96) auszubilden.

2. Airbag nach Anspruch 1, **dadurch gekennzeichnet, dass** die mindestens eine Verbindungsstoffbahn (16; 56; 96) einen dem Insassen gegenüberliegenden Teil der linken Airbaghälfte (12; 52; 92) und einen dem Insassen gegenüberliegenden Teil der rechten Airbaghälfte (14; 54; 94) verbindet.

3. Airbag nach Anspruch 1 oder 2, **dadurch gekennzeichnet, dass** die mindestens eine Verbindungsstoffbahn (16; 56; 96) ein insassenseitiges vorderes Ende der linken Airbaghälfte (12; 52; 92) und ein insassenseitiges vorderes Ende der rechten Airbaghälfte (14; 54; 94) verbindet.

4. Airbag nach einem der Ansprüche 1 bis 3, **dadurch gekennzeichnet, dass** die mindestens eine Verbindungsstoffbahn (16; 56; 96) umfasst eine obere Verbindungsstoffbahn, um einen oberen Abschnitt des dem Insassen gegenüberliegenden Teils der linken Airbaghälfte und einen oberen Abschnitt des dem Insassen gegenüberliegenden Teils der rechten Airbaghälfte zu verbinden; und eine untere Verbindungsstoffbahn, um einen unteren Abschnitt des dem Insassen gegenüberliegenden Teils der linken Airbaghälfte und einen unteren Abschnitt des dem Insassen gegenüberliegenden Teils der rechten Airbaghälfte zu verbinden.

5. Airbag nach einem der Ansprüche 1 bis 4, **dadurch gekennzeichnet, dass** die Links-Rechts-Breite der Verbindungsstoffbahn (16; 56; 96) 200 bis 450 mm beträgt.

6. Airbag nach einem der Ansprüche 1 bis 5, **dadurch gekennzeichnet, dass** verbindende Stoffbahnen (40) vorhanden sind, um obere und untere Abschnitte der linken und der rechten Airbaghälfte (12; 14) entsprechend oder kreuzweise zu verbinden, wobei die verbindende Stoffbahn (40) eine Links-Rechts-Breite aufweist, welche sich bei der Ausdehnung der linken und der rechten Airbaghälfte (12, 14) dehnt.

## Revendications

1. Un coussin de sécurité gonflable comprenant un demi-coussin de sécurité gonflable gauche (12, 52, 92) destiné à être gonflé à l'avant et du côté gauche d'un occupant, un demi-coussin de sécurité gonflable droit (14, 54, 94) destiné à être gonflé à l'avant et du côté droit de l'occupant, et au moins un panneau de liaison (16, 56, 96) reliant les demi-coussins de sécurité gonflables gauche et droit, dans lequel les demi-coussins de sécurité gonflables gauche et droit sont conçus pour se mettre en contact l'un à l'autre en cas de détente de celui-ci, **caractérisé en ce que**
une moitié du corps du panneau de liaison (16', 56, 96') est reliée à l'extrémité avant du demi-coussin de sécurité gonflable gauche (12 , 52 , 92) et une autre moitié du corps du panneau de liaison (16', 56 , 96') est reliée à l'extrémité avant du demi-coussin de sécurité gonflable droit (14, 54, 94), la moitié du corps du panneau de liaison (16') et l'autre moitié du corps du panneau de liaison (16') étant assemblées pour constituer le panneau de liaison (16, 56, 96).

2. Le coussin de sécurité gonflable selon la revendication 1, dans lequel l'au moins un panneau de liaison (16, 56, 96) relie une partie du demi-coussin de sécurité gonflable gauche (12, 52, 92) faisant face à l'occupant et une partie du demi-coussin de sécurité gonflable droit (14, 54, 94) faisant face à l'occupant.

3. Le coussin de sécurité gonflable selon la revendication 1 ou 2, dans lequel l'au moins un panneau de liaison (16, 56, 96) relie une extrémité avant côté occupant du demi-coussin de sécurité gonflable gauche (12, 52, 92) et une extrémité avant côté occupant du demi-coussin de sécurité gonflable droit (14, 54, 94).

4. Le coussin de sécurité gonflable selon l'une quelconque des revendications 1 à 3, dans lequel l'au moins un panneau de liaison (16, 56, 96) comprend un panneau de liaison supérieur pour relier une partie supérieure de la partie du demi-coussin de sécurité gonflable gauche faisant face à l'occupant et une partie supérieure de la partie du demi-coussin de sécurité gonflable droit faisant face à l'occupant, et un panneau de liaison inférieur pour relier une partie inférieure de la partie du demi-coussin de sécurité gonflable gauche faisant face à l'occupant et une partie inférieure de la partie du demi-coussin de sécurité gonflable droit faisant face à l'occupant.

5. Le coussin de sécurité gonflable selon l'une quelconque des revendications 1 à 4, dans lequel la largeur de gauche à droite du panneau de liaison (16, 56, 96) est de 200 à 450 mm.

6. Le coussin de sécurité gonflable selon l'une quelconque des revendications 1 à 5, dans lequel des panneaux de connexion (40) sont prévus pour relier respectivement ou transversalement des parties supérieures ou inférieures des demi-coussins de sécurité gonflables gauche et droit (12, 14), le panneau de connexion (40) présentant une largeur de gauche à droite mise sous tension suite à la détente des demi-coussins de sécurité gonflables gauche et droit (12, 14).
